# EUROPEAN PATENT APPLICATION

(11) **EP 2 450 774 A1**
(43) Date of publication of application: **09.05.2012**
(21) Application number: 11186109.2
(22) Date of filing: 21.10.2011
(51) Int. Cl.: G06F 3/03, G06K 7/00, H04M 1/247

(54) **Method and apparatus for detecting movement of a medium and providing associated output**

(30) Priority: 03.11.2010 US 938997
(71) Applicant: Nokia Corporation, 02150 Espoo (FI)
(72) Inventor: Terlouw, Michiel, 00150 Helsinki (FI); Evans, John, 00150 Helsinki (FI)
(74) Representative: Nokia Corporation

(57) **Abstract**

Various methods for card reading and providing associated output are provided. One example method includes receiving one or more signals provided by one or more sensors, the one or more signals being an indication that a medium is moving relative to the one or more sensor, determining position attributes of the medium based at least on the one or more signals provided by the sensor, and causing a graphic to be presented as moving in relation to the movement of the medium relative to the one or more sensors based at least on the position attributes Similar and related example methods, example apparatuses, and example computer program products are also provided.

## Description

### TECHNICAL FIELD

Embodiments of the present invention relate generally to implementing a user interface, and, more particularly, relate to a method, apparatus, and computer program product for providing a user interface in association with media detection and/or media reading.

### BACKGROUND

As computing and communications devices become increasingly flexible and convenient, users of the devices have become increasingly reliant on the functionality offered by the devices in a variety of settings. Due to advances made in screen technologies and other user-interface hardware, users continue to demand more convenient and intuitive user interfaces. To meet the demands of users or encourage utilization of new functionality, innovation in the design and operation of user interfaces must keep pace.

### SUMMARY

Example methods, example apparatuses, and example computer program products are described herein that provide for media detection and an associated output. In one example embodiment, a device configured to receive a medium, such as, for example, a card, a disc (e.g., DVD or CD disc), a memory stick or memory card, other device or object (e.g., a cable) that may be inserted into a receiving opening, or the like, may be configured to detect the movement of a medium and present a graphic that moves in relation to the movement of the medium. In some example embodiments, the medium may be detected as the medium moves into and within a receiving opening by means of a sensor (e.g., mechanical, optical, or the like) of an electronic device, such as, for example, a card reader (e.g., magnetic strip reader). According to various example embodiments, the movement of the medium may therefore be detected and an associated output, for example in the form of a displayed graphic, can be provided that moves in relation to the detected movement of the medium.

One example embodiment of the present invention is an example method. The example method may comprise receiving one or more signals provided by one or more sensors, where the one or more signals are an indication that a medium is moving relative to the one or more sensors. The example method may also comprise determining position attributes of the medium based at least on the one or more signals provided by the sensor, and causing a graphic to be presented as moving in relation to the movement of the medium relative to the one or more sensors based at least on the position attributes.

An additional example embodiment is an apparatus comprising at least one processor and at least one memory including computer program code, the at least one memory and the computer program code configured to, with the at least one processor, direct the apparatus to perform various functionalities. In this regard, the example apparatus may be directed to receive one or more signals provided by one or more sensors, where the one or more signals are an indication that a medium is moving relative to the one or more sensors. The example apparatus may be further directed to determine position attributes of the medium based at least on the one or more signals provided by the sensor, and cause a graphic to be presented as moving in relation to the movement of the medium relative to the one or more sensors based at least on the position attributes.

Another example embodiment is a computer program that, when executed causes an apparatus to perform functionality. In this regard, the computer program, when executed may cause, an apparatus to receive one or more signals provided by one or more sensors, where the one or more signals are an indication that a medium is moving relative to the one or more sensors. The computer program may also cause the apparatus to determine position attributes of the medium based at least on the one or more signals provided by the sensor, and cause a graphic to be presented as moving in relation to the movement of the medium relative to the one or more sensors based at least on the position attributes.

Another example embodiment is a computer program product comprising a non-transitory memory having computer program code stored thereon, wherein the computer program code is configured to direct an apparatus to perform various functionalities. In this regard, the program code may be configured to direct the apparatus to receive one or more signals provided by one or more sensors, where the one or more signals are an indication that a medium is moving relative to the one or more sensors. The computer program code may also being configured to direct the apparatus to determine position attributes of the medium based at least on the one or more signals provided by the sensor, and cause a graphic to be presented as moving in relation to the movement of the medium relative to the one or more sensors based at least on the position attributes.

Another example apparatus comprises means for performing various functionalities. In this regard, the apparatus may include means for receiving one or more signals provided by one or more sensors, where the one or more signals are an indication that a medium is moving relative to the one or more sensors. The example apparatus may also comprise means for determining position attributes of the medium based at least on the one or more signals provided by the sensor, and means for causing a graphic to be presented as moving in relation to the movement of the medium relative to the one or more sensors based at least on the position attributes.

### BRIEF DESCRIPTION OF THE DRAWING(S)

Having thus described some example embodiments of the invention in general terms, reference will now be made to the accompanying drawings, which are not necessarily drawn to scale, and wherein:

FIG. la illustrates an example card with a readable strip according to an example embodiment of the present invention;

FIG. 1b illustrates an example card moving relative to a sensor according to an example embodiment of the present invention;

FIG. 1c illustrates an example card moving relative to another type of sensor according to an example embodiment of the present invention;

FIGs. 2a-2d illustrate an example procedure for card reading and providing associated output according to an example embodiment of the present invention;

FIG. 3 illustrates a block diagram of an apparatus and associated system for card reading and providing associated output according to some example embodiments of the present invention;

FIG. 4 illustrates a block diagram of a terminal configured for card reading and providing associated output according to some example embodiment of the present invention; and

FIG. 5 is a flow chart of an example method for providing output associated with a card reading according to an example embodiment of the present invention.

### DETAILED DESCRIPTION

Example embodiments of the present invention will now be described more fully hereinafter with reference to the accompanying drawings, in which some, but not all embodiments of the invention are shown. Indeed, the invention may be embodied in many different forms and should not be construed as limited to the embodiments set forth herein; rather, these embodiments are provided so that this disclosure will satisfy applicable legal requirements. Like reference numerals refer to like elements throughout. The terms "data," "content," "information," and similar terms may be used interchangeably, according to some example embodiments of the present invention, to refer to data capable of being transmitted, received, operated on, and/or stored.

As used herein, the term 'circuitry' refers to all of the following: (a) hardware-only circuit implementations (such as implementations in only analog and/or digital circuitry); (b) to combinations of circuits and software (and/or firmware), such as (as applicable): (i) to a combination of processor(s) or (ii) to portions of processor(s)/software (including digital signal processor(s)), software, and memory(ies) that work together to cause an apparatus, such as a mobile phone or server, to perform various functions); and (c) to circuits, such as a microprocessor(s) or a portion of a microprocessor(s), that require software or firmware for operation, even if the software or firmware is not physically present.

This definition of 'circuitry' applies to all uses of this term in this application, including in any claims. As a further example, as used in this application, the term "circuitry" would also cover an implementation of merely a processor (or multiple processors) or portion of a processor and its (or their) accompanying software and/or firmware. The term "circuitry" would also cover, for example and if applicable to the particular claim element, a baseband integrated circuit or applications processor integrated circuit for a mobile phone or a similar integrated circuit in a server, a cellular network device, or other network device.

Various example embodiments of the present invention relate to methods, apparatuses, and computer program products for detecting movement of a medium and providing associated output. In this regard, according to various example embodiments, a graphic may be presented on a display, where the graphic moves in relationship to the movement of a medium (e.g., a card, a disc, a memory stick or memory card, other device or object that may be inserted into a receiving opening, or the like) relative to a sensor (e.g., a mechanical sensor, an optical sensor, a magnetic sensor, such as a read head). In some example embodiments, data that is encoded on the medium may be read as the medium is moving. The displayed graphic, according to some example embodiments, may be presented in the form of the medium (e.g., a silhouette of a card or a portion of a card), which can, according to some example embodiments, simulate transparency as a medium enters and leaves a device that includes the receiving opening.

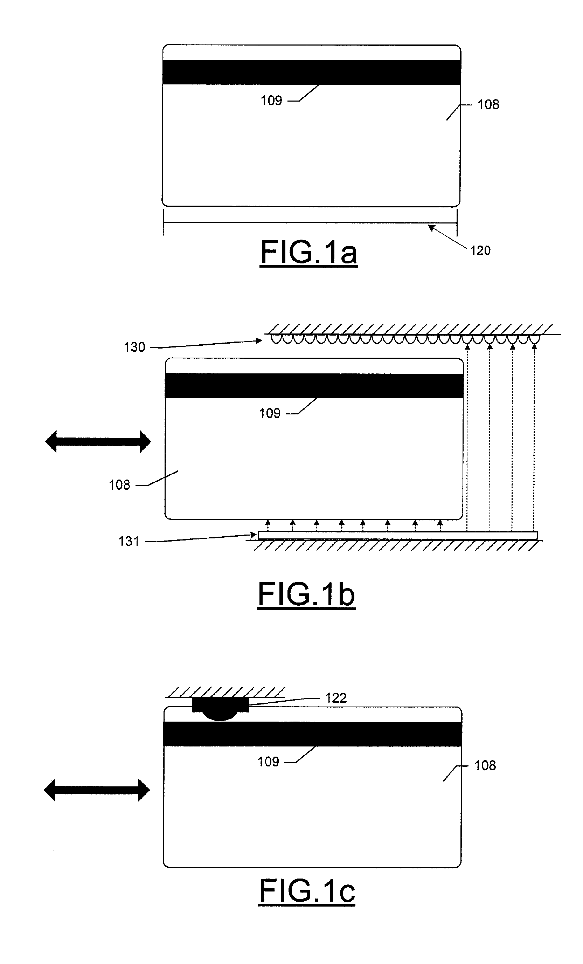

FIG. 1a illustrates an example medium in the form of a card 108 according to various example embodiments of the present invention. While many of example embodiments are described with respect to a medium that is a card, it is contemplated that the same or similar techniques can be used with other types of media. Card 108 may be, for example, a credit card, a debit card, a gift card, a customer loyalty/promotional card, an access/security card, an admission/fare ticket, a drivers license or other identification card, a library card, or the like. While in some example embodiments, the card 108 need not include a readable strip 109, in the example embodiments of Figs. 1a-1c, the card 108 includes a readable strip 109. The readable strip 109 may be, for example, a magnetic readable strip. In some example embodiments, the readable strip may be, for example, an optical readable strip, such as a bar code. The readable strip 109 may be encoded with card data. The card data may include various information, such as, for example, a start sentinel, a formatting code, an account number or value, one or more field separators, a country code, a user name, an expiration date, discretionary data, an end sentinel, a data accuracy check value (e.g., a checksum, a longitudinal redundancy check (LRC)), or the like. Card data may be stored on one or more tracks (e.g., three tracks) of the readable strip 109. In this regard, each track may include various and separate data. While strip 109 may be referred to as a readable strip, in some embodiments, data may be written to the readable strip 109.

The card 108 may have defined dimensions and, as such, a determination of the position of the card 108 may be performed based on the defined dimensions. In some example embodiments, the readable strip 109 may also have defined dimensions. For example, the card 108 may have dimensions of 86 millimeters by 54 millimeters. According to some example embodiments, the data encoded in the readable strip 109 may be distributed across the length 120 of the strip. For example, where the readable strip 109 is a magnetic strip, separate regions across the length of the magnetic readable strip may be evenly distributed such that each region is magnetized to indicate a respective bit value. In this regard, the encoding of the magnetic strip may be performed in accordance with a defined standard such as ISO/IEC (International Organization for Standardization/International Electotechnical Commission) standard 7811. As such, a predefined bit spacing (e.g., bits per unit length, such as bits per inch (bpi)) for the strip may be defined. The bit spacing may, in some example embodiments, be defined on a per track basis. In this regard, for example, a first track of the strip may include 210 bpi and hold 79 six bit plus parity bit read-only characters. For example, a second track may include 75 bpi and hold 40 four bit plus parity bit characters, and a third track may include 210 bpi and hold 107 four bit plus parity bit characters. Because the length of the strip is predefined and the bit spacing is predefined, as a card is being read and each bit is being received, a position of the card relative to the read head can be determined based on the number of bits received.

FIG. 1b illustrates the card 108 as the card 108 moves into or out of a receiving opening that includes a sensor 130, where the sensor 130 is an optical or light sensor. According to various example embodiments, the sensor 130 may be a collection of sensors, such as a sensor array that, for example, runs along a length of the receiving opening. Light emitter 131, which may be one or more light emitting diodes or the like, may be configured to emit light (as indicated by the dashed arrows) that may be detected by the sensor 130. As shown in FIG. 1b, as the card 108 moves into or out of the receiving opening, light provided by the light emitter 131 is blocked by the card 108. The sensor 130 therefore receives the light at portions of the sensor where the light is not obstructed by the card 108. Since the sensor 130 can detect the location of the edge of the card 108, as indicated by a change in the reception of light, the sensor 130 can generate one or more signals that can be received and interpreted by a processor to determine the location of the card 108 in the receiving opening, as well as, the direction and speed of motion of the of the card 108.

According to another alternative example embodiment, the sensor may be a mechanical sensor such as a lever that is operated as a switch. In this regard, as the card 108 is inserted or removed, the switch or a series of switches may be actuated. The actuation of the switch or switches can generate one or more signals, which may be configured to indicate a position of the card 108 based on, for example, a known location of the last actuated switch. The direction and speed of the movement of the card 108 may also be determined based on the actuation of the switch or switches and the resultant signals generated by the switch or switches.

Alternatively, according to some example embodiments, the card may mechanically interface with a wheel that rotates as the card moves into or out of the receiving opening. In this regard, movement of the wheel may be tracked and a signal indicating the position of the card relative to the wheel sensor may be generated and received by a processor for analysis to determine the position, the direction of movement, and/or the speed of movement.

FIG. 1c illustrates another example embodiment, where the card 108 is within read proximity of a read head 122, and signals generated by the read head 122 can be interpreted to determine the position, direction of movement, and speed of movement of the card 108. Read head 122 may be a magnetic read head, optical read head, or the like. As a magnetic read head, the read head 122 may be configured to detect the series of magnetic regions of the readable strip 109 as the magnetic regions move past the read head 122. The read head 122 may then provide values for the detected bits to be received by a processor to take action based on the detected bits (e.g., perform a sales transaction).

As mentioned above, the readable strip 109, or a track within the readable strip 109, may include a start sentinel and an end sentinel. The start sentinel may be a predefined character that can be used to indicate the beginning or starting point on the readable strip. The start sentinel can therefore be leveraged to determine that a card has been properly inserted (e.g., with the correct orientation) and provide and indication of an origin position for a card swipe through a reader. In this regard, when a processor recognizes a start sentinel character that is received from the read head, the processor can determine the position of the card relative to the read head because the start sentinel is positioned at a known location at one end of the strip 109. The end sentinel character indicates an end of the data that is to be provided and also indicates a known end position at the other end of the readable strip 109. Since, in some embodiments, a card may be moved by the read head 122 in either direction, the origin or starting point for the read process may begin at the start sentinel character position or the end sentinel character position (where the bits of the end sentinel character are transposed). As such, a processor may be configured to identify the start sentinel character at an origin for a card read process or a transposed end sentinel at an origin of the card. As such, the processor may identify origin data within the received card data that is either an indication of a start sentinel or an indication of an end sentinel. In either event, the bits of data that are read and processed may be counted. The identification of a start sentinel or sentinel characters, the number of bits that have been received, the bit spacing, the length of the readable strip, and the like may be determined and/or utilized by a processor and considered as position attributes. Using these various position attributes the processor can determine a location of the card relative to the read head at any time during a read operation (e.g., a card swipe). Since the start or end sentinel provides a known location on the card and the bits of the card may have a known bit spacing, the position of the card relative to the read head may be determined at any time based on the number of bits that have been read and provided to the processor. Since the position can be determined at any time during a read operation, by considering a time between bit reads, a rate of movement of the card relative to the read head may also be determined. Using the determined position of the card, a processor may also instruct a display to present a graphic, where the movement of the graphic has a relationship (e.g., moves in unison or substantially in unison) with the movement of the card.

According to various example embodiments, the origin data may simply be the first received bit. The position of the first bit may be known with respect to the card and then each subsequent bit may be simply counted to determine the location of the card relative to the read head, based on the known bit spacing.

In some example embodiments, a card 108 may be moved into and out of a card reading slot to perform a read operation. In this scenario, a card swipe involves movement in two, opposite directions. Initially, the card may move into the receiving slot, and, as the card moves into the slot, the read head may begin reading the readable strip, for example, beginning with the start sentinel. The number of bits received can be counted as described above, and progress of the movement of the card into the slot may be tracked and the position determined. When the card 108 reaches a mechanical stop position, the end sentinel (e.g., end position data) may also have been read indicating that movement of the card is expected to change direction. As such, when a user begins to remove the card, the end sentinel may be identified and, again, bits may be counted as the card leaves the slot to determine the position of the card.

According to some example embodiments, rather than counting bits encoded in the readable strip 109 to determine position, data segment separators may be counted and tracked. In this regard, the card data that is encoded in the readable strip 109 may be broken into segments and separated by data segment separators. According to various example embodiments, a data segment separator may have a known bit sequence and be located at known positions on the readable strip 109. According to some example embodiments, the data segment separators need not have a uniform spacing. Rather, the data segment separators may be positioned on the readable strip in association with a size of a data segment or field. The size of the segment or field and the bit spacing may be predefined and, using this information, the position of the data segment separators may be determined. As such, the position of the card 108 relative to a read head 122 may be determined based on identification and tracking (e.g., counting) of the separators based on position attributes including the known positions of the separators.

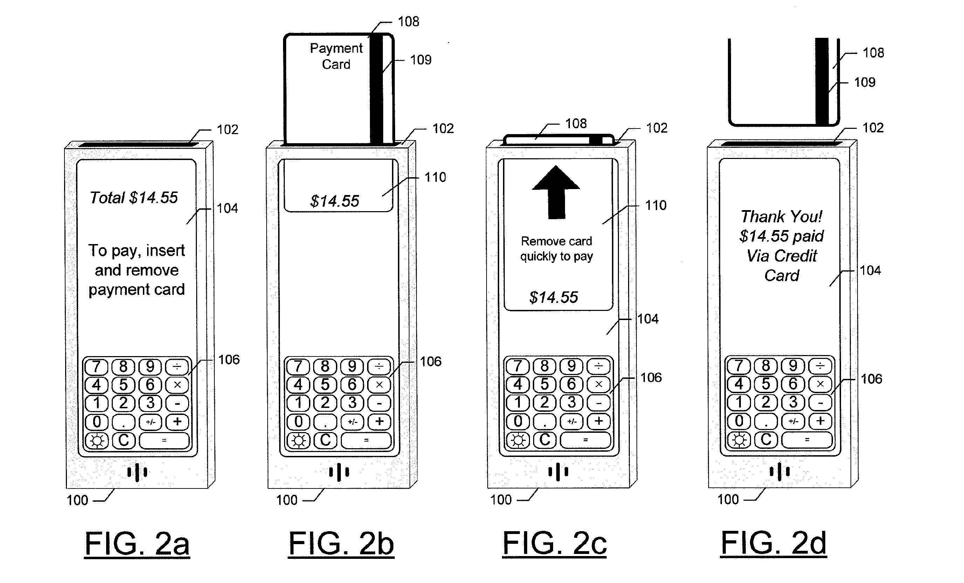

FIGs. 2a through 2b illustrate a procedure involving an insertion and removal operation of a card 108, and outputting a graphic based on the card movement presented on a display of an electronic device 100. Electronic device 100 may take any form factor and may include a sensor (not depicted), a processor (not depicted), and a display 104. While electronic device 100 is illustrated as an insertion slot card receiving device, it is contemplated that electronic device 100 may alternatively be an open ended, swipe-type card receiving device. The processor referred to with respect to the electronic device 100 may be one or more processors configured in hardware (e.g., as an application specific integrated circuit, programmable gate array, or the like), or a processor configured by executing software stored on a non-transitory computer readable medium of the electronic device 100. The display 104 may be any type of display such as, for example, a touch screen display. The keypad 106 may be a hardware keypad with movable keys, or presented as a virtual keypad via a touch screen display. The card slot 102, a type of receiving opening, may be configured to receive a card 108 as described above. Within the slot 102, a sensor may be positioned so that insertion of a card 108 into the slot causes the sensor to interact with the card 108 to generate and provide signals to the processor for analysis to determine position attributes of the card 108.

In FIG. 2a, an example scenario is illustrated where a user has requested to purchase goods or services and the electronic device 100 is requesting that the user insert a card to begin a payment transaction procedure. In FIG. 2b, a user has begun the process of inserting a card 108 into the slot 102 and a sensor, for example, in the forma of a read head has provided card data to a processor as the card is being inserted. As described above, the position of the card relative to the read head can be determined based on the position attributes determined by the processor. Using the determined position, the processor of the electronic device 100 may cause a graphic 110 to be presented on the display 104. The graphic 110 may be displayed as moving on the display in relation to the movement of the card 108 as the card is being inserted. Since the processor may be configured to repeatedly update the position of the card 108, the processor may cause the graphic 110 to be presented as moving at a rate of speed that is the same or related to the rate of speed of the movement of the card 108.

The graphic 110 may be any type of graphic that moves in relation to the movement of the card 108. In some example embodiments, such as those depicted in FIGs. 2b and 2c, the graphic may be an outline or other representation of a card to provide the illusion of transparency as the card is being inserted or removed from the slot 102. Other examples of the graphic 110 that may move or change in relation to the movement of the card may include text (e.g., text derived from the received card data such as name, account number, card type or provider, or the like), a scrolling indicator, a bar that elongates or shortens in relation to the movement of the card, an image (e.g., an image of an item being purchased), or the like.

Further, in some example embodiments, the electronic device 100 may include a mechanism for detecting the insertion of a card 108. For example, a sensor, such as those described above, including, but not limited to, a mechanical switch or light beam detector may be used to determine that a card has been inserted. The processor may receive this indication and be configured to expect the receipt of card data since a card 108 has been inserted into the slot 102. However, in example embodiments that include a read head, in the event that no card data or erroneous card data is received by the processor, the processor may determine that the card 108 has been improperly oriented such that the readable strip 109 cannot interact with the read head to obtain the card data. As such, when the processor detects a card insertion and receives card data, the processor may cause the display 104 to present an indication that the card 108 has been properly inserted. The indication of a proper insertion may include setting a color of the graphic 110 to green or providing a textual indication that the card 108 has been properly inserted. On the other hand, when the processor detects a card insertion and does not receive card data or receives erroneous card data, the processor may cause the display 104 to present an indication that the card 108 has not been properly inserted or that an error has occurred. The indication of an improper insertion or error may include setting a color of the graphic 110 to red or providing a textual indication that the card 108 has been improperly inserted or an error has occurred.

In FIG. 2c, the processor may continue to cause the display to show movement of the graphic 110 in relation to the movement of the card. However, when the card is fully inserted (e.g., as indicated by the use by a mechanical stop), the processor may receive a signal from one or more sensors that indicate that the card is fully inserted (e.g., the signal may include end data in the form of an end sentinel character or a transposed start sentinel character). In response to identifying the end data, the processor may cause the display to request that the user remove the card 108. Again, as the card 108 is removed, the processor may cause the display to present movement of the graphic 110 in relation to the movement of the card 108 as indicated by the sensor.

According to some example embodiments, the process of inserting the card 108 into the slot 102 and removing the card 108 from the slot 102 may be thought of as two separate procedures. As such, in embodiments where the sensor is a read head, origin data (e.g., a start sentinel character) for the insertion process may be considered end data for the removal process, and vice versa, depending on the orientation of the card 108.

In FIG. 2d, the card 108 has been removed. The processor may receive a signal from the sensor indicating that the card has been removed. Further, the mechanism for detecting the insertion of the card, described above, may also be used to determine when the card has been removed. In this regard, based on the example scenario for FIGs. 2a-2d, the card data needed to complete the example payment transaction may be received, and the processor may interface with the appropriate financial institution (e.g., via a communications interface) and complete the transaction. Upon completion, the processor may cause the display 104 of the electronic device 100 to provide an indication of the successful transaction.

In addition to the operations described with respect to FIGs. 2a through 2b, the electronic device 100 may, prior to insertion of the card 108, while the card 108 is inserted, or after removal of the card 108, request authentication information from the user. In some example embodiments, the authentication information may be a personal identification number or code. In other example embodiments, the authentication information may be provided in the form of a finger print, facial recognition, or the like, when the electronic device 100 is configured with the hardware (e.g., a camera module) and/or software to support such authentication functionality. Upon receiving and verifying the authentication information, the electronic device 100 may cause the display 104 to provide an indication of the successful authentication of the user.

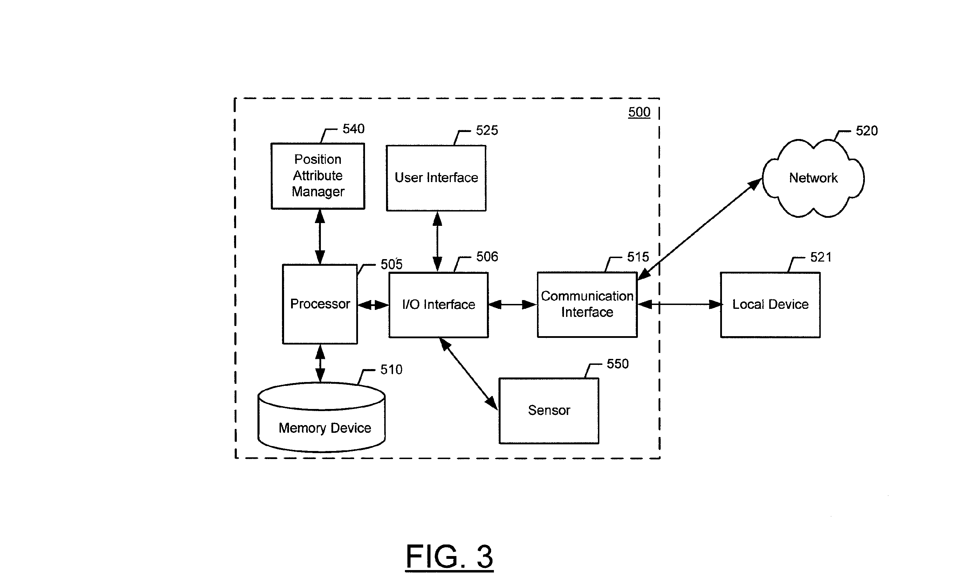

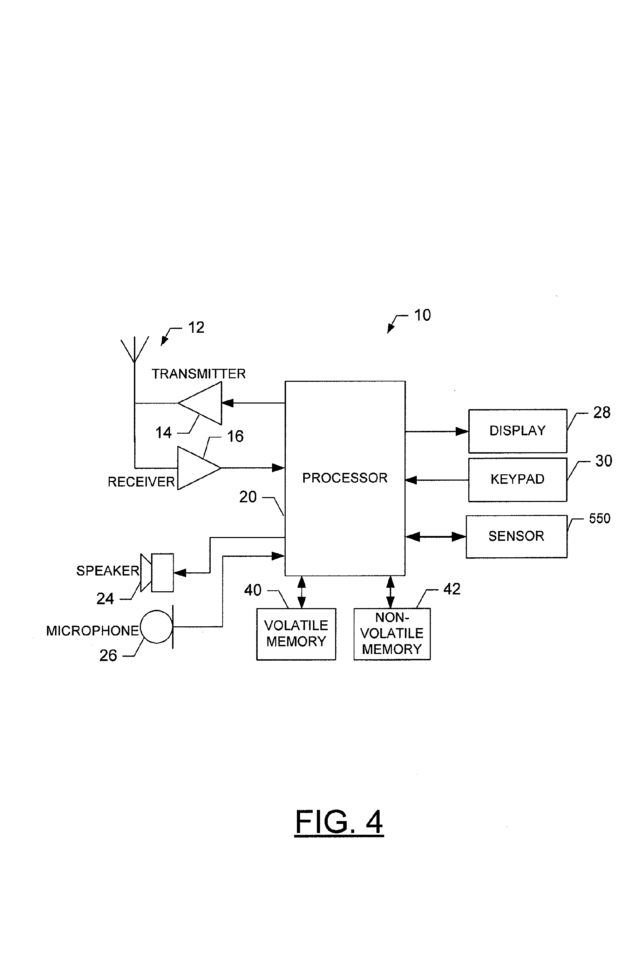

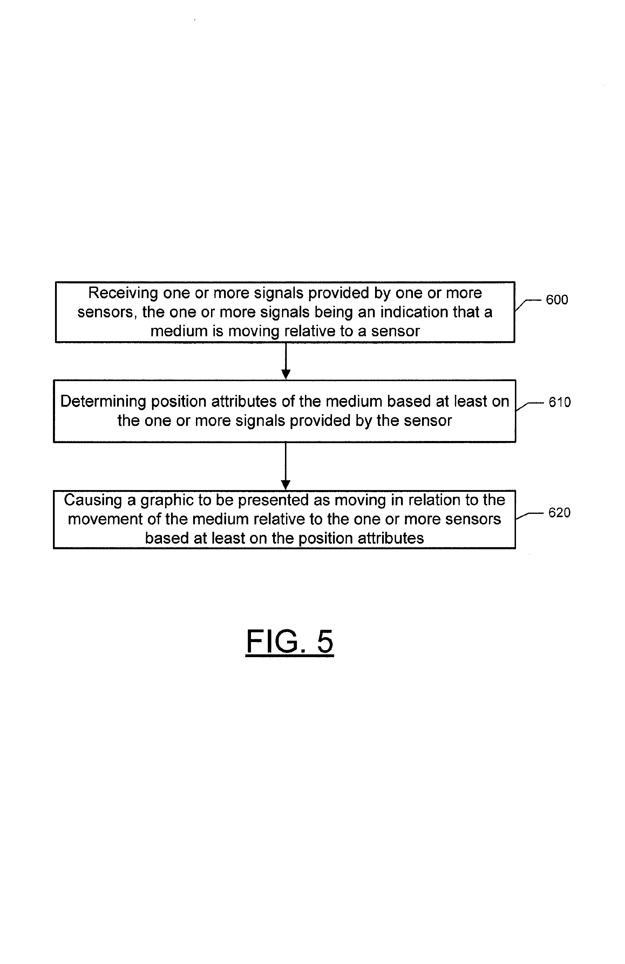

The description provided above and generally herein illustrates example methods, example apparatuses, and example computer program products for detecting movement of a medium and providing associated output. FIGs. 3 and 4 depict example apparatuses that may be configured to perform various functionalities as described herein, including those described with respect to the descriptions of FIGs. 1a-2d provided above, with respect to the flowchart of FIG. 5, and the operations and functionality otherwise described herein.

Referring now to FIG. 3, an example embodiment of the present invention is depicted as apparatus 500. The device 100 may be an example embodiment of apparatus 500. In some example embodiments, the apparatus 500 may, be embodied as, or included as a component of, an electronic device with wired and/or wireless communications capabilities. In some example embodiments, the apparatus 500 may be part of a communications device, such as a stationary or a mobile communications terminal. As a mobile device, the apparatus 500 may be a mobile and/or wireless communications node such as, for example, a mobile and/or wireless card reader, cash register, automated teller machine, pay station (e.g., pay-at-the-pump station), entryway security device, computer, server access point, handheld wireless device (e.g., telephone, portable digital assistant (PDA), mobile television, gaming device, camera, video recorder, audio/video player (e.g., CD/DVD player), radio, digital book reader, and/or a global positioning system (GPS) device), any combination of the aforementioned, or the like.

FIG. 3 illustrates a block diagram of example components of the apparatus 500. The example apparatus 500 comprises or is otherwise in communication with a processor 505, a memory device 510, an Input/Output (I/O) interface 506, a user interface 525, a communications interface 515, a sensor 550, and position attribute manager 540. The processor 505 may, according to some example embodiments, be embodied as various means for implementing the various functionalities of example embodiments of the present invention including, for example, a microprocessor, a coprocessor, a controller, a special-purpose integrated circuit such as, for example, an ASIC (application specific integrated circuit), an FPGA (field programmable gate array), or a hardware accelerator, processing circuitry or the like. According to one example embodiment, processor 505 may be representative of a plurality of processors, or one or more multiple core processors, operating in concert. Further, the processor 505 may be comprised of a plurality of transistors, logic gates, a clock (e.g., oscillator), other circuitry, and the like to facilitate performance of the functionality described herein. The processor 505 may, but need not, include one or more accompanying digital signal processors. In some example embodiments, the processor 505 is configured to execute instructions stored in the memory device 510 or instructions otherwise accessible to the processor 505. The processor 505 may be configured to operate such that the processor causes or directs the apparatus 500 to perform various functionalities described herein.

Whether configured as hardware or via instructions stored on a computer-readable storage medium, or by a combination thereof, the processor 505 may be an entity and means capable of performing operations according to embodiments of the present invention while configured accordingly. Thus, in example embodiments where the processor 505 is embodied as, or is part of, an ASIC, FPGA, or the like, the processor 505 is specifically configured hardware for conducting the operations described herein. Alternatively, in example embodiments where the processor 505 is embodied as an executor of instructions stored on a computer-readable storage medium, the instructions specifically configure the processor 505 to perform the algorithms and operations described herein. In some example embodiments, the processor 505 is a processor of a specific device (e.g., a communications server or mobile device) configured for employing example embodiments of the present invention by further configuration of the processor 505 via executed instructions for performing the algorithms, methods, and operations described herein.

The memory device 510 may be one or more tangible and/or non-transitory computer-readable storage media that may include volatile and/or non-volatile memory. In some example embodiments, the memory device 510 comprises Random Access Memory (RAM) including dynamic and/or static RAM, on-chip or off-chip cache memory, and/or the like. Further, memory device 510 may include non-volatile memory, which may be embedded and/or removable, and may include, for example, read-only memory, flash memory, magnetic storage devices (e.g., hard disks, floppy disk drives, magnetic tape, etc.), optical disc drives and/or media, non-volatile random access memory (NVRAM), and/or the like. Memory device 510 may include a cache area for temporary storage of data. In this regard, some or all of memory device 510 may be included within the processor 505. In some example embodiments, the memory device 510 may be in communication with the processor 505 and/or other components via a shared bus.

Further, the memory device 510 may be configured to store information, data, applications, computer-readable program code instructions, and/or the like for enabling the processor 505 and the example apparatus 500 to carry out various functions in accordance with example embodiments of the present invention described herein. For example, the memory device 510 may be configured to buffer input data for processing by the processor 505. Additionally, or alternatively, the memory device 510 may be configured to store instructions for execution by the processor 505.

The I/O interface 506 may be any device, circuitry, or means embodied in hardware, software, or a combination of hardware and software that is configured to interface the processor 505 with other circuitry or devices, such as the communications interface 515. In some example embodiments, the I/O interface may embody or be in communication with a bus that is shared by multiple components. In some example embodiments, the processor 505 may interface with the memory 510 via the I/O interface 506. The I/O interface 506 may be configured to convert signals and data into a form that may be interpreted by the processor 505. The I/O interface 506 may also perform buffering of inputs and outputs to support the operation of the processor 505. According to some example embodiments, the processor 505 and the I/O interface 506 may be combined onto a single chip or integrated circuit configured to perform, or cause the apparatus 500 to perform, various functionalities of the present invention.

In some embodiments, the apparatus 500 or some of the components of apparatus 500 (e.g., the processor 505 and the memory device 510) may be embodied as a chip or chip set. In other words, the apparatus 500 may comprise one or more physical packages (e.g., chips) including materials, components and/or wires on a structural assembly (e.g., a baseboard). The structural assembly may provide physical strength, conservation of size, and/or limitation of electrical interaction for component circuitry included thereon. The apparatus 500, or particular components of the apparatus 500, may therefore, in some cases, be configured to implement embodiments of the present invention on a single chip or as a single "system on a chip." As such, in some cases, a chip or chipset may constitute means for performing the functionalities described herein and with respect to the processor 505.

The communication interface 515 may be any device or means embodied in hardware, a computer program product, or a combination of hardware and a computer program product that is configured to receive and/or transmit data from/to a network 520 and/or any other device or module in communication with the example apparatus 500. In this regard, the communications interface 515 may also be configured to implement communications between the apparatus 500 and a local device 521, which may be a cash register, computer, or other device that may interface with a card reader device or read head.

The communications interface may be configured to communicate information via any type of wired or wireless connection, and via any type of communications protocol, such as a communications protocol that supports cellular communications. According to various example embodiments, the communication interface 515 may be configured to support the transmission and reception of communications in a variety of networks including, but not limited to Internet Protocol-based networks (e.g., the Internet), cellular networks, or the like. Further, the communications interface 515 may be configured to support device-to-device communications. Processor 505 may also be configured to facilitate communications via the communications interface 515 by, for example, controlling hardware included within the communications interface 515. In this regard, the communication interface 515 may include, for example, communications driver circuitry (e.g., circuitry that supports wired communications via, for example, fiber optic connections), one or more antennas, a transmitter, a receiver, a transceiver and/or supporting hardware, including, for example, a processor for enabling communications. Via the communication interface 515, the example apparatus 500 may communicate with various other network entities in a device-to-device fashion and/or via indirect communications via a base station, access point, server, gateway, router, or the like.

The user interface 525 may be in communication with the processor 505 to receive user input via the user interface 525 and/or to present output to a user as, for example, audible, visual, mechanical, or other output indications. The user interface 525 may include, for example, a keyboard, a mouse, a joystick, a display (e.g., a touch screen display), a microphone, a speaker, camera, accelerometer, or other input/output mechanisms. Further, the processor 505 may comprise, or be in communication with, user interface circuitry configured to control at least some functions of one or more elements of the user interface. The processor 505 and/or user interface circuitry may be configured to control one or more functions of one or more elements of the user interface through computer program instructions (e.g., software and/or firmware) stored on a memory accessible to the processor 505 (e.g., volatile memory, non-volatile memory, and/or the like). The user interface 525 may also be configured to support the implementation of haptic feedback. In this regard, the user interface 525, as controlled by processor 505, may include a vibra, a piezo, and/or an audio device configured for haptic feedback as described herein. In some example embodiments, the user interface circuitry is configured to facilitate user control of at least some functions of the apparatus 500 through the use of a display and configured to respond to user inputs. The processor 505 may also comprise, or be in communication with, display circuitry configured to display at least a portion of a user interface, the display and the display circuitry configured to facilitate user control of at least some functions of the apparatus 500.

In addition to or in lieu of, some of the user input and out devices described above, the user interface 525 may include, as mentioned above, one or more touch screen displays. A touch screen display may be configured to visually present graphical information to a user, as well as receive user input via a touch sensitive screen. The touch screen display, which may be embodied as any known touch screen display, may also include a touch detection surface configured to enable touch recognition by any suitable technique, such as resistive, capacitive, infrared, strain gauge, surface wave, optical imaging, dispersive signal technology, acoustic pulse recognition, or other like techniques. In some example embodiments, the touch screen display may be configured to operate in a hovering mode, where movements of a finger, stylus, or other implement can be sensed when sufficiently near the touch screen surface, without physically touching the surface. The touch screen displays may include all of the hardware necessary to detect a touch when contact is made with the touch detection surface and send an indication to, for example, processor 505 indicating characteristics of the touch such as location information. A touch event may occur when an object, such as a stylus, finger, pen, pencil or any other pointing device, comes into contact with a portion of the touch detection surface of the touch screen display in a manner sufficient to register as a touch. The touch screen display may therefore be configured to generate touch event location data indicating the location of the touch event on the screen.

The sensor 550 may be internal or external to the apparatus 500. According to various example embodiments, the sensor 550 may be a mechanical sensor (a switch, moveable wheel, or the like), an optical sensor (e.g., a light sensor, barcode scanner, or the like), a magnetic read head, or the like. According to some example embodiments, the sensor may be configured to detect the presence and movement of a medium in a receiving opening of the apparatus 500 and provide signals that may be processed to determine a position, direction of movement, and/or rate of movement of a medium within the receiving opening. According to some example embodiments, the sensor 550 may be a magnetic read head that is configured to detect data encoded in a magnetic strip of a medium that is a card. In this regard, as a card with a magnetic strip moves past the magnetic read head, the read head is capable of detecting magnetic regions within the magnetic strip and convert the detection of these regions into digital information. In some example embodiments, the sensor 550 may be an optical sensor or reader capable of detecting the edge of the medium and/or reading visible representations of data including, for example, bar codes from the medium.

The position attribute manager 540 of example apparatus 500 may be any means or device embodied, partially or wholly, in hardware, a computer program product, or a combination of hardware and a computer program product, such as processor 505 implementing stored instructions to configure the example apparatus 500, memory device 510 storing executable program code instructions configured to carry out the functions described herein, or a hardware configured processor 505 that is configured to carry out the functions of the position attribute manager 540 as described herein. In an example embodiment, the processor 505 comprises, or controls, the position attribute manager 540. The position attribute manager 540 may be, partially or wholly, embodied as processors similar to, but separate from processor 505. In this regard, the position attribute manager 540 may be in communication with the processor 505. In various example embodiments, the position attribute manager 540 may, partially or wholly, reside on differing apparatuses such that some or all of the functionality of the position attribute manager 540 may be performed by a first apparatus, and the remainder of the functionality of the position attribute manager 540 may be performed by one or more other apparatuses.

Further, the apparatus 500 and the processor 505 may be configured to perform the following functionality via position attribute manager 540 as well as other functionality described herein. The position attribute manager 540 may be configured to cause or direct means such as the processor 505 and/or the apparatus 500 to perform various functionalities, such as those described with respect to FIGs. 1a-2d, 5, and 6, and as generally described herein.

For example, with reference to FIG. 5, the position attribute manager 540 may be configured to receive one or more signals provided by one or more sensors at 600. In this regard, the one or more signals may be an indication that a medium is moving relative to a sensor. The position attribute manager 540 may also be configured to determine position attributes of the medium based at least on the one or more signals provided by the sensor at 610, and cause a graphic to be presented as moving in relation to the movement of the medium relative to the one or more sensors based at least on the position attributes at 620.

In some example embodiments, the one or more signals may comprise card data due to movement of the medium relative to the one or more sensors, where the medium is a card and the one or more sensors are one more read heads. Additionally, in some example embodiments, the position attribute manager 540 may be configured to identify, within the received card data, origin data indicative of an original position on a readable strip of the card, and determine a current position of the card relative to the one or more read heads based at least on a number of bits of card data received subsequent to the origin data and a predefined bit spacing for the card. In some additional embodiments, the position attribute manager 540 may be configured to determine a current position of the card relative to the one or more read heads based at least on a number of bits of card data received subsequent to the origin data as the card is being moved in a first direction relative to the one or more read heads. In this regard, according to some example embodiments, the position attribute manager 540 may also be configured to identify, within the received card data, end data indicative of an end position on a readable strip of the card, and determine the current position of the card relative to the read head based at least on a number of bits of card data received subsequent to the end data and a predefined bit spacing for the card as the card is being moved in a second direction relative to the one or more read heads, wherein the first direction is opposite to the second direction.

Additionally or alternatively, the position attribute manager 540 may be configured to determine the position attributes of the medium includes being directed to determine the position attributes of the medium based on predefined dimensions of the medium. According to some example embodiments, the position attribute manager 540 may be configured to cause the graphic to be presented as moving, based at least on the position attributes, at a rate of speed that relates to a rate of speed of the medium relative to the one or more sensors. Still in some example embodiments, the position attribute manager 540 may be additionally or alternatively configured to cause presentation of an indication of a successful authentication of a user to make a purchase using an account indicated by the one or more signals.

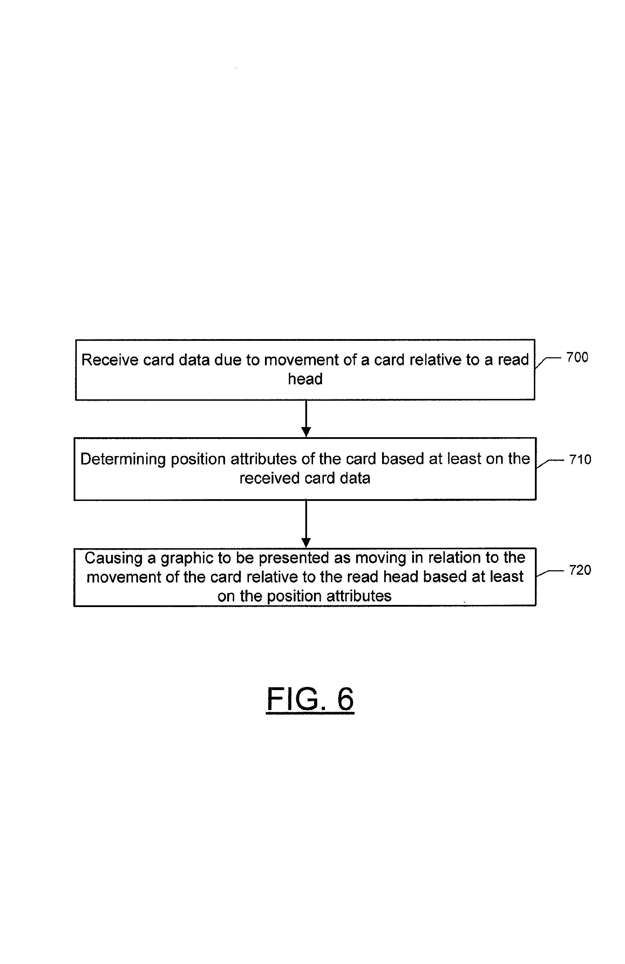

Following from some additional example embodiments, and with reference to FIG. 6, the position attribute manager 540 may be configured to receive card data due to movement of a card relative to the read head at 700, and determine position attributes of the card based at least on the received card data at 710. Further, the position attribute manager 540 may be configured to cause a graphic to be presented as moving in relation to the movement of the card relative to the read head based at least on the position attributes at 720. Additionally, or alternatively, according to some example embodiments, the position attribute manager 540 may be configured to determine position attributes by identifying, within the received card data, origin data indicative of an original position on a readable strip of the card. In this regard, the position attribute manager 540 may also be configured to determine a current position of the card relative to the read head based at least on a number of bits of card data received subsequent to the origin data and a predefined bit spacing for the card. Further, according to some example embodiments, the position attribute manager 540 may be configured to determine a current position of the card relative to the read head based at least on a number of bits of card data received subsequent to the origin data as the card is being moved in a first direction relative to the read head. The position attribute manager 540 may also be configured to determine the position attributes by identifying, within the received card data, end data indicative of an end position on a readable strip of the card, and determine the current position of the card relative to the read head based at least on a number of bits of card data received subsequent to the end data and a predefined bit spacing for the card as the card is being moved in a second direction relative to the read head, wherein the first direction is opposite to the second direction.

Additionally or alternatively, according to some example embodiments, the position attribute manager 540 may be configured to determine the position attributes by identifying origin data indicative of an original position on a readable strip of the card, and determine a current position of the card relative to the read head based at least on a number of data segment separators received subsequent to the origin data and a predefined data segment separator spacing for the card. Further, in some example embodiments, the position attribute manager 540 may be additionally or alternatively configured to cause the graphic to be presented with an indication that the card has been oriented such that a readable strip of the card is aligned with the read head.

In some example embodiments, the position attribute manager 540 may additionally or alternatively be configured to cause the graphic to be presented as moving, based at least on the position attributes, at a rate of speed that relates to a rate of speed of the card relative to the read head. Further, the position attribute manager 540 may be additionally configured to cause presentation of an indication of a successful authentication of a user to make a purchase using an account indicated by the received card data.

Referring now to FIG. 4, a more specific example apparatus in accordance with various embodiments of the present invention is provided. The example apparatus of FIG. 4 is a mobile terminal 10 configured to communicate within a wireless network, such as a cellular communications network. The mobile terminal 10 may be configured to perform the functionality of the device 100 or apparatus 500 as described herein. More specifically, the mobile terminal 10 may be caused to perform the functionality described with respect to FIGs. 1a-2d, 5, and/or 6, via the processor 20. In this regard, according to some example embodiments, the processor 20 may be configured to perform the functionality described with respect to the position attribute manager 540. Processor 20 may be an integrated circuit or chip configured similar to the processor 505 together with, for example, the I/O interface 506. Further, volatile memory 40 and non-volatile memory 42 may be configured to support the operation of the processor 20 as computer readable storage media.

The mobile terminal 10 may also include a read head 550, an antenna 12, a transmitter 14, and a receiver 16, which may be included as parts of a communications interface of the mobile terminal 10. The speaker 24, the microphone 26, display 28 (which may be a touch screen display), and the keypad 30 may be included as parts of a user interface.

FIGs. 2a-2d, 5, and 6 illustrate flowcharts and/or processes associated with example systems, methods, and/or computer program products according to example embodiments of the invention. It will be understood that each operation, and/or combinations of operations, can be implemented by various means. Means for implementing the operations, combinations of the operations, or other functionality of example embodiments of the present invention described herein may include hardware, and/or a computer program product including a computer-readable storage medium (as opposed to a computer-readable transmission medium which describes a propagating signal) having one or more computer program code instructions, program instructions, or executable computer-readable program code instructions stored therein. In this regard, program code instructions for performing the operations and functions of FIGs. 2a-2d, 5, 6, and otherwise described herein may be stored on a memory device, such as memory device 510, volatile memory 40, or volatile memory 42, of an example apparatus, such as example apparatus 500 or mobile terminal 10, and executed by a processor, such as the processor 505 or processor 20. As will be appreciated, any such program code instructions may be loaded onto a computer or other programmable apparatus (e.g., processor 505, memory device 510, or the like) from a computer-readable storage medium to produce a particular machine, such that the particular machine becomes a means for implementing the functions specified in the operations. These program code instructions may also be stored in a computer-readable storage medium that can direct a computer, a processor, or other programmable apparatus to function in a particular manner to thereby generate a particular machine or particular article of manufacture. The instructions stored in the computer-readable storage medium may produce an article of manufacture, where the article of manufacture becomes a means for implementing the functions specified. The program code instructions may be retrieved from a computer-readable storage medium and loaded into a computer, processor, or other programmable apparatus to configure the computer, processor, or other programmable apparatus to execute operations to be performed on or by the computer, processor, or other programmable apparatus. Retrieval, loading, and execution of the program code instructions may be performed sequentially such that one instruction is retrieved, loaded, and executed at a time. In some example embodiments, retrieval, loading and/or execution may be performed in parallel such that multiple instructions are retrieved, loaded, and/or executed together. Execution of the program code instructions may produce a computer-implemented process such that the instructions executed by the computer, processor, or other programmable apparatus provide operations for implementing the functions specified in the operations.

Accordingly, execution of instructions associated with the operations of the flowchart by a processor, or storage of instructions associated with the blocks or operations in a computer-readable storage medium, support combinations of operations for performing the specified functions. It will also be understood that one or more operations, and combinations of blocks or operations, may be implemented by special purpose hardware-based computer systems and/or processors which perform the specified functions, or combinations of special purpose hardware and program code instructions.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions other than those explicitly described above are also contemplated as may be set forth in some of the appended claims. Although specific terms are employed herein, they are used in a generic and descriptive sense only and not for purposes of limitation.

## Claims

1. A method comprising:
receiving one or more signals provided by one or more sensors, the one or more signals being an indication that a medium is moving relative to a sensor;
determining position attributes of the medium based at least on the one or more signals provided by the sensor; and
causing a graphic to be presented as moving in relation to the movement of the medium relative to the one or more sensors based at least on the position attributes.

2. The method of claim 1, wherein receiving the one or more signals includes receiving the one or more signals as card data due to movement of the medium relative to the one or more sensors, where the medium is a card and the one or more sensors are one or more read heads.

3. The method of claim 2, wherein determining the position attributes includes:
identifying, within the received card data, origin data indicative of an original position on a readable strip of the card; and
determining a current position of the card relative to the one or more read heads based at least on a number of bits of card data received subsequent to the origin data and a predefined bit spacing for the card.

4. The method of claim 3, wherein determining the current position of the card includes determining a current position of the card relative to the one or more read heads based at least on a number of bits of card data received subsequent to the origin data as the card is being moved in a first direction relative to the one or more read heads; and
wherein determining the position attributes further includes:
identifying, within the received card data, end data indicative of an end position on a readable strip of the card; and
determining the current position of the card relative to the read head based at least on a number of bits of card data received subsequent to the end data and a predefined bit spacing for the card as the card is being moved in a second direction relative to the one or more read heads, wherein the first direction is opposite to the second direction.

5. The method of any of claims 1 to 4, wherein determining the position attributes of the medium includes determining the position attributes of the medium based on predefined dimensions of the medium.

6. The method of any of claims 1 to 5, wherein causing the graphic to be presented on the display includes causing the graphic to be presented as moving, based at least on the position attributes, at a rate of speed that relates to a rate of speed of the medium relative to the one or more sensors.

7. The method of any of claims 1 to 6, further comprising causing presentation of an indication of a successful authentication of a user to make a purchase using an account indicated by the one or more signals.

8. An apparatus:
means for receiving one or more signals provided by one or more sensors, the one or more signals being an indication that a medium is moving relative to a sensor;
means for determining position attributes of the medium based at least on the one or more signals provided by the sensor; and
means for causing a graphic to be presented as moving in relation to the movement of the medium relative to the one or more sensors based at least on the position attributes.

9. The apparatus of claim 8, wherein the apparatus comprises a card reader.

10. The apparatus of claim 9, wherein the apparatus further comprises the one or more sensors configured to detect the presence and movement of the medium.

11. The apparatus of claim 8 comprising means for performing the method of any of claims 2 to 7.

12. A computer program for performing the method of any of claims 1 to 7.
